# EUROPÄISCHE PATENTANMELDUNG

(11) **EP 0 598 232 A1**
(43) Veröffentlichungstag der Anmeldung: **25.05.1994**
(21) Anmeldenummer: 93116858.7
(22) Anmeldetag: 19.10.1993
(51) Int. Cl.: F16M 11/24

(54) **In der Höhe stufenlos verstellbare Haltevorrichtung für Geräte, insbesondere Videoanlagen**

(30) Priorität: 22.10.1992 DE 9214325 U; 18.03.1993 DE 9304023 U
(71) Anmelder: Bergbauer, Kurt-Josef, D-84419 Schwindegg (DE)
(72) Erfinder: Bergbauer, Kurt-Josef, D-84419 Schwindegg (DE)
(74) Vertreter: Lewald, Dietrich, Dipl.-Ing.

(57) **Zusammenfassung**

Die Erfindung betrifft eine verstellbare Haltevorrichtung für Geräte insbesondere Viedoanlagen mit einer in zumindest einem Halter (102) gehaltenen Standsäule (101), die eine in der Höhe verstellbare Halterung (104) trägt, mit der eine Gerätehalterung (110) zur Aufnahme des Gerätes verbunden ist und zeichnet sich dadurch aus, daß die Standsäule (101) eine sich vertikal erstreckende Zahnstange (103) aufweist, die sich mit einem, in der Halterung (104) gelagerten Zahnrad in Eingriff befindet, das von einem selbstsperrenden Schneckengetriebe angetrieben wird, dessen Schnecke mittels eines Antriebselements drehbar ist.

## Beschreibung

Die Erfindung betrifft eine in der Höhe stufenlos verstellbare Haltevorrichtung für Geräte insbesondere Videoanlagen gemäß dem Oberbegriff des Schutzanspruchs 1.

Es sind Haltevorrichtungen für Videoanlagen und dergleichen, wie Monitore oder Meßeinrichtungen, bekannt die in der Höhe stufenlos verstellbar sind. Diese Vorrichtungen weisen eine Standsäule auf, die eine in der Höhe verstellbare Halterung trägt. Diese ist wiederum meistens über einen in der Länge verstellbaren Ausleger mit der eigentlichen Gerätehalterung verbunden, die das zu haltende Gerät aufnimmt. Die Standsäule kann mit einem Standfuß versehen sein oder mittels Halter fest an einer Wand montiert sein.

Die Halterung ist an der Standsäule auf und ab bewegbar und kann, ist die gewünschte Position erreicht, mittels einer Feststelleinrichtung an dieser Position blockiert werden.

Aufgabe der Erfindung ist es, eine Haltevorrichtung für Geräte insbesondere Videoanlagen zu schaffen, die sich auf einfache Weise mit nur einer Hand in der Höhe verstellen und festsetzen läßt.

Die Aufgabe wird durch die Merkmale des Schutzanspruchs 1 gelöst. Bei der erfindungsgemäßen Haltevorrichtung weist die Standsäule eine sich vertikal erstreckende Zahnstange auf, die sich mit einem in der Halterung gelagerten Zahnrad in Eingriff befindet. Dieses Zahnrad wird von einem selbstsperrenden Schneckengetriebe angetrieben, dessen Schnecke mittels eines Antriebselementes vom Benutzer zur Verstellung der Höhe gedreht werden kann. Als Antriebselement kann beispielsweise eine Handkurbel oder ein Elektromotor vorgesehen sein.

Durch die Selbsthemmung des Schneckengetriebes benötigt die erfindungsgemäße Haltevorrichtung keinen Feststellmechanismus. Durch die hohe Untersetzung des Schneckengetriebes ist die Haltevorrichtung darüberhinaus mit geringem Kraftaufwand in der Höhe verstellbar und auf einfache Weise exakt einstellbar, ohne daß eine spezielle Einrichtung zur Feineinstellung nötig wäre.

Das Fehlen einer Feststelleinrichtung macht sich besonders positiv bemerkbar, wenn die Haltevorrichtung öfters in der Höhe nachgeregelt werden muß, da das Lösen und Schließen der Feststelleinrichtung entfällt.

Gemäß Anspruch 2 ist die Standsäule drehbar gelagert, wodurch sich die Haltevorrichtung noch besser den individuellen Bedürfnissen anpassen läßt. Die Standsäule kann mit einem Feststellmechanismus ausgestattet sein oder die Reibung der Lagerung kann so bemessen sein, daß ein unbeabsichtigtes Verdrehen der Standsäule nahezu ausgeschlossen ist.

Gemäß Anspruch 3 ist nicht die Standsäule drehbar, sondern die Halterung ist zumindest über einen bestimmten Winkelbereich um die Standsäule verschwenkbar. Hierzu kann die Zahnstange im Querschnitt als Kreissegment ausgeführt sein. Durch die Reibung der Zähne des Zahnrades auf den Zähnen der Zahnstange wird der Verschwenkbewegung bereits einen gewissen Widerstand entgegengesetzt.

Gemäß Anspruch 5 ist die Halterung mit der Gerätehalterung über einen Ausleger verbunden. Zweckmäßiger Weise ist dieser Ausleger mittels eines Auszuges in seiner Länge verstellbar, um die Haltevorrichtung besser den jeweiligen Erfordernissen anpassen zu können. Wird hierzu ein Teleskopauszug verwendet, so führt bereits das Gewicht an dem geräteseitigen Auslegerende zu einem gewissen Verkanten der Teleskoprohre, wodurch ein unbeabsichtigtes Verschieben des Auslegers behindert wird. Ist der Auszug jedoch gelagert, um ein leichtes Aus- und Einschieben zu gewährleisten, ist es von Vorteil, eine Feststelleinrichtung vorzusehen.

Diese Feststelleinrichtung kann aus einfachen Klemmschrauben bestehen oder auch einen komplizierteren Mechanismus aufweisen der beispielsweise, wie auch die Höhenverstellung, an der Halterung betätigt werden kann.

Um das zu haltende Gerät beser zum Benutzer hin ausrichten zu können, kann die Gerätehalterung gemäß den Ansprüchen 9 und 11 um eine vertikale Achse drehbar und um zumindest eine Achse verschwenkbar sein.

Die vom Benutzer eingestellte Stellung des Gerätes kann über Reibung oder eine Feststelleinrichtung oder auch über Rasten festgehalten werden.

Zur Verschwenkung der Gerätehalterung hat sich der Hebelmechanismus nach Anspruch 10 als besonders vorteilhaft erwiesen. Die Verschwenkung der Gerätehalterung wird über einen Hebel bewirkt, der mit einem um einen Drehpunkt verschwenkbaren Handhebel an einer Stelle verbunden ist, die in einem bestimmten Abstand vom Drehpunkt des Handhebels vorgesehen ist. Aufgrund dieser Hebelkinematik bewirkt eine Verschwenkung des Handhebels in einem Bereich, in dem dieser weitgehend parallel zu dem mit der Gerätehalterung verbundenen Hebel steht, nur einen geringen Schwenkwinkel der Gerätehalterung wohingegen mit zunehmenden Winkel zwischen den Hebeln auch der Schwenkwinkel bei gleichem Verstellwinkel des Handhebels stark zunimmt.

Mittels dieser Kinematik läßt sich die Gerätehalterung einerseits in dem meist genutzten Winkelbereich leicht sehr fein einstellen und andererseits die Gerätehalterung schnell in einen anderen Winkelbereich verstellen.

Wird die Haltevorrichtung für unterschiedliche Geräte genutzt, so ist nicht immer gewährleistet, daß sich der Schwerpunkt des Gerätes über der Schwenkachse befindet, wodurch sich ein Kippmoment an der Gerätehalterung ergibt. Ein unerwünschtes Kippen kann mittels einer Feststelleinrichtung oder einer Kompensationseinrichtung vermieden werden. Es ist auch möglich, den gesamten Mechanismus mit einer so hohen Reibung zu versehen, daß zumindest ein beschränktes Kippmoment aufgenommen werden kann. Die Kompensation des Kippmoments kann über die Federkraft einer verstellbaren Feder oder über ein in seiner Lage verstellbares Gewicht erfolgen.

Die Erfindung wird folgend anhand Figuren näher erläutert.

Figur 1 zeigt ein erstes Ausführungsbeispiel in dreidimensionaler Darstellung.

Figur 2 zeigt ein zweites Ausführungsbeispiel im Querschnitt.

Figur 3 zeigt das zweite Ausführungsbeispiel in der Draufsicht, teilweise geschnitten.

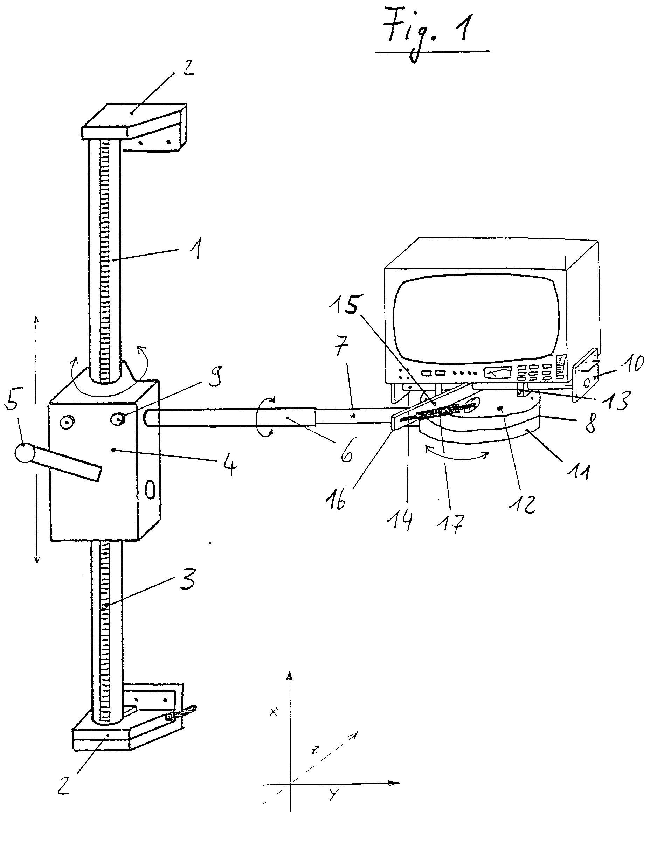

In Figur 1 ist eine Standsäule 1 zu sehen, die mittels Halter 2 am oberen und am unteren Ende an einer Wand oder einem Gerät befestigbar ist. Das Profil der Standsäule 1 weist einen runden Querschnitt auf und ist auf der Vorderseite als schmale Zahnstange 3 ausgebildet. Die Standsäule 1 trägt die Halterung 4, die zur Höhenverstellung eine Handkurbel 5 aufweist. Über diese Handkurbel 5 wird ein im Innenraum der Halterung 4 angeordnetes Schneckengetriebe angetrieben; wobei über die Handkurbel 5 eine Schnecke gedreht wird, die ein Schneckenrad antreibt, das wiederum ein Zahnrad antreibt. Das Zahnrad befindet sich mit der Zahnstange 3 in Eingriff und bewirkt somit, je nach Drehrichtung, daß sich die Halterung 4 an der Standsäule 1 in x-Richtung aufwärts oder abwärts bewegt. Durch die Selbsthemmung des Schneckengetriebes bleibt die Halterung 4 in ihrer Stellung stehen, sobald die Handkurbel 5 nicht mehr gedreht wird.

Die runde Standsäule 1 ist in den Haltern 2 drehbar gelagert, so daß die gesamte Haltevorrichtung mit der Standsäule 1 um die x-Achse gedreht werden kann. An der Halterung 4 ist ein Ausleger 6 befestigt, der über einen ausziehbaren Auszug 7, die eigentliche Gerätehaltevorrichtung. Der Auszug 7 ist in seiner Position mittels eines nicht dargestellten Klemmechanismus arretierbar, der durch eine Schraube 9 an der Halterung 4 betätigbar ist.

Die Gerätehaltevorrichtung weist einen Drehteller 8 auf, der ein festes mit dem Auszug 7 verbundenes Unterteil 11 und einen auf diesem drehbaren Teller 12 aufweist. Der Teller 12 hat an seiner Oberseite Wellenböcke 13, die eine Schwenkwelle 14 lagern, auf der eine Gerätehalterung 10 vorgesehen ist, die die zu haltende Videoanlage aufnimmt.

Die Schwenkwelle 14 ist mit einem Hebel 15 versehen, dessen der Schwenkwelle 14 abgewandtes Ende 16 über ein, in seiner Länge verstellbares, Einstellglied 17 mit dem Teller 12 verbunden ist. Wird die Länge des Einstellgliedes 17 verkürzt, so wird die Schwenkwelle 14 gedreht und die Videoanlage nach unten geneigt, und umgekehrt.

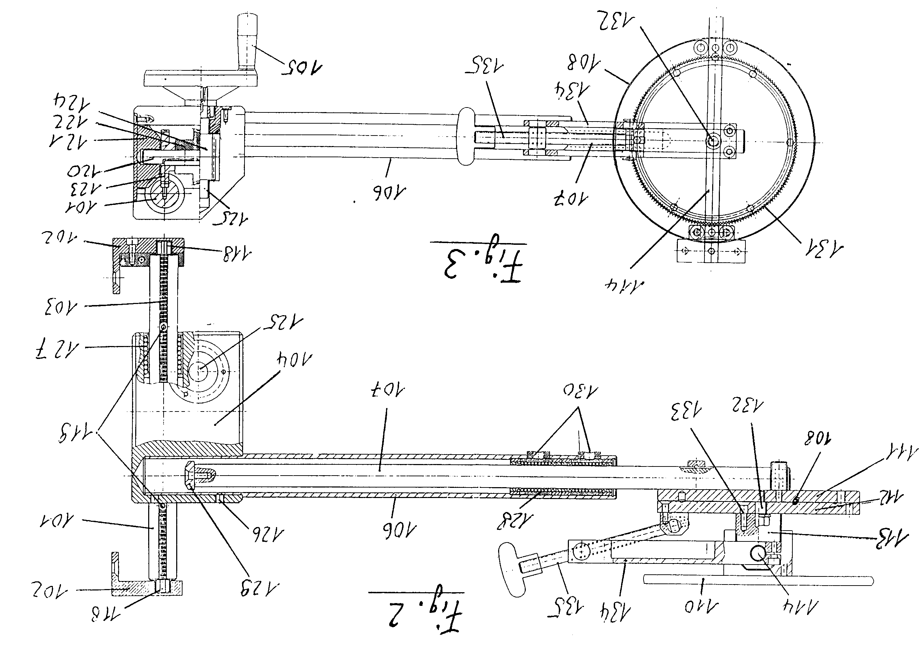

Das Schneckengetriebe wird in Zusammenhang mit dem zweiten Ausführungsbeispiel gemäß den Figuren 2 und 3 näher beschrieben, das nur geringfügig vom ersten Ausführungsbeispiel abweicht.

Eine im Querschnitt runde Standsäule 101 ist mit Lagerzapfen 118 in einem oberen und einem unteren Halter 102 drehbar gelagert. Die Standsäule 101 ist in Längsrichtung mit einer Ausnehmung versehen, in die eine Zahnstange 103 mittels Befestigungsschrauben 119 eingeschraubt ist. Auf der Standsäule 101 ist die Halterung 104 verschieblich mittels Rollenlager 127 gelagert; über ein Schneckengetriebe kann die Halterung 104 aufwärts und abwärts bewegt werden. Das Schneckengetriebe weist eine Scheckenradwelle 120, auf die in einem Lagerbock 121 der Halterung 104 gelagert ist. Mit dieser Schneckenradwelle 120 ist ein Schneckenrad 122 und ein Zahnrad 123 drehfest verbunden. Das Zahnrad 123 ist mit der Zahnstange 103 der Standsäule 101 in Eingriff, wobei der EIngriff so ausgelegt ist, daß sich immer mehrere Zähne miteinander in Eingriff befinden, um auch beim Überfahren der Befestigungsschrauben 119 einen ausreichenden Eingriff zu gewährleisten.

Das Schneckenrad 122 wirkt mit einer Schnecke 124 zusammen die drehfest auf einer Schneckenwelle 125 sitzt. Diese Schneckenwelle 125 ist ebenfalls in der Halterung 104 gelagert und wird mittels einer Handkurbel 105 angetrieben, die außerhalb des Gehäuses der Halterung 104 angeordnet ist.

In die Halterung 104 ist der Ausleger 106 eingepreßt, der zusätzlich über Schrauben gesichert werden kann, die in Gewinde 126, die in der Halterung 104 vorgesehen sind, eingedreht werden können. Im Ausleger 106 ist über Linearkugellager 128 ein Auszugsrohr 107 gelagert. Das Auszugsrohr 107 ist an seinem der Halterung 104 zugewandten Ende mit einem Stopper 129 versehen, der ein vollständiges Herausziehen des Auszugsrohres 107 aus dem Ausleger unmöglich macht. Zwischen den Linearkugellagern 128 sind Bohrungen mit Gewindeeinsätzen 130 im Ausleger 106 vorgesehen, in die Feststellschrauben zum Feststellen des Auszugsrohres 107 in einer bestimmten Position eingeschraubt werden können.

Das Auszugsrohr 107 ist mit dem Unterteil 111 eines Drehteller 108 fest verbunden. Auf dem Unterteil 111 ist mittels eines Kugellagerkranzes 131 ein Teller 112 drehbar gelagert, wobei das Unterteil 111 und der Teller 112 mittels einer Zentralschraube 132 im Drehzentrum so verbunden sind, daß diese nicht voneinander abgehoben werden können.

Auf dem Teller 112 ist mittels Schrauben 133 ein Wellenbock 113 befestigt, der die Schwenkwelle 114 lagert. Auf der Schwenkwelle 114 wiederum ist die Gerätehalterung 110 befestigt. Die Schwenkwelle 114 ist über eine Klemmung drehfest mit einem Hebel 134 gekoppelt, der an seinem der Schwenkwelle 114 abgewandten Ende an einem Handhebel 135, etwa in dessen Mitte, gelagert ist. Der Handhebel 135 weist an seinem der Schwenkwelle 114 abgewandten Ende einen Handknauf 136 auf und ist am gegenüberliegenden Ende verschwenkbar am drehbaren Teller 112 gelagert.

Die beschriebene Haltevorrichtung kann mittels der Handkurbel 105 in der Höhe verstellt werden, wobei eine Feststellung nicht erforderlich ist, da durch die Selbsthemmung des Schneckengetriebes die eingestellte Position auch bei einem Loslassen der Handkurbel 105 eingehalten wird. Durch die drehbare Lagerung der Standsäule 101 in den Haltern 102 kann die ganze Haltevorrichtung gedreht werden. Mittels des teleskopartigen Auszuges des Auslegers 106 kann dessen Länge gut den jeweiligen Erfordernissen angepaßt werden. Das zu haltende Gerät wird von einer drehbaren und schwenkbaren Gerätehalterung 110 aufgenommen und kann somit ideal gegenüber dem Benutzer ausgerichtet werden.

## Patentansprüche

1. Verstellbare Haltevorrichtung für Geräte insbesondere Videoanlagen mit einer in zumindest einem Halter (2, 102) gehaltenen Standsäule (1, 101), die eine in der Höhe verstellbare Halterung (4, 104) trägt, mit der eine Gerätehalterung (10, 110) zur Aufnahme des Gerätes verbunden ist, **dadurch gekennzeichnet, daß** die Standsäule (1, 101) eine sich vertikal erstreckende Zahnstange (3, 103) aufweist, die sich mit einem, in der Halterung (4, 104) gelagerten Zahnrad (123) in Eingriff befindet, das von einem selbstsperrenden Schneckengetriebe angetrieben wird, dessen Schnecke (124) mittels eines Antriebselementes (5, 105) drehbar ist.

2. Verstellbare Haltevorrichtung nach Anspruch 1, **dadurch gekennzeichnet, daß** die Standsäule (1, 101) in dem Halter (2, 102) drehbar gelagert ist.

3. Verstellbare Haltevorrichtung nach Anspruch 1, **dadurch gekennzeichnet, daß** sich die Zahnstange (3, 103) über einen bestimmten Winkelbereich der Standsäule (1, 101) erstreckt und die Halterung (4, 104) in diesem Winkelbereich um die Standsäule (1, 101) schwenkbar ist.

4. Verstellbare Haltevorrichtung nach einem der Ansprüche 1 bis 3, **dadurch gekennzeichnet, daß** die Standsäule (1, 101) aus einem Profil besteht, das mit einer Zahnstange (3, 103) verbunden ist.

5. Verstellbare Haltevorrichtung nach einem der Ansprüche 1 bis 4, **dadurch gekennzeichnet, daß** die Halterung (4, 104) und die Gerätehalterung (10, 110) über einen Ausleger (6, 106) miteinander verbunden sind.

6. Verstellbare Haltevorrichtung nach Anspruch 5, **dadurch gekennzeichnet, daß** der Ausleger (6, 106) mittels eines Auszuges (7, 107) in seiner Länge verstellbar ist.

7. Verstellbare Haltevorrichtung nach Anspruch 6, **dadurch gekennzeichnet, daß** der Auszug (7, 107) mittels einer Feststelleinrichtung feststellbar ist.

8. Verstellbare Haltevorrichtung nach einem der Ansprüche 1 bis 7, **dadurch gekennzeichnet, daß** die Gerätehalterung (10, 110) um eine vertikale Achse drehbar ist.

9. Verstellbare Haltevorrichtung nach Anspruch 8, **dadurch gekennzeichnet, daß** die Gerätehalterung (10, 110) nur gegen einen bestimmten Widerstand drehbar ist.

10. Verstellbare Haltevorrichtung nach einem der Ansprüche 1 bis 9, **dadurch gekennzeichnet, daß** die Gerätehalterung (10, 110) um zumindest eine Achse verschwenkbar ist.

11. Verstellbare Haltevorrichtung nach Anspruch 10, **dadurch gekennzeichnet, daß** die Gerätehalterung (10, 110) mittels eines Hebels (134) verschwenkbar ist, der an einem verschwenkbaren Handhebel (135) an einer Stelle gelagert ist, die in einem Abstand vom Drehpunkt des Handhebels (135) vorgesehen ist.

12. Verstellbare Haltevorrichtung nach einem der Ansprüche 10 oder 11, **gekennzeichnet durch** eine Kompensationseinrichtung, mittels der ein Kippmoment der Gerätehalterung ausgleichbar ist, indem mittels einer Feder oder eines Gewichts ein Drehmoment auf die Gerätehalterung (10, 110) aufbringbar ist.
